# EUROPÄISCHE PATENTSCHRIFT

(11) **EP 4 193 894 B1**
(45) Veröffentlichungstag und Bekanntmachung des Hinweises auf die Patenterteilung: **29.01.2025**
(21) Anmeldenummer: 22208091.3
(22) Anmeldetag: 17.11.2022
(51) Int. Cl.: A47J 37/07

(54) **OUTDOOR-GASGRILL**
OUTDOOR GAS GRILL
GRIL À GAZ EXTÉRIEUR

(30) Priorität: 08.12.2021 DE 202021004012 U; 16.02.2022 DE 102022201583
(43) Veröffentlichungstag der Anmeldung: 14.06.2023
(73) Patentinhaber: RÖSLE GROUP GmbH, 87616 Marktoberdorf (DE)
(72) Erfinder: Jung, David, 87439 Kempten (DE)
(74) Vertreter: Dr. Weitzel & Partner

(56) Entgegenhaltungen:
- EP-A1- 3 375 335
- US-A1- 2012 266 856
- US-B1- 6 176 173
- US-B2- 10 342 383

## Beschreibung

Die vorliegende Erfindung betrifft einen Outdoor-Gasgrill gemäß dem Oberbegriff von Anspruch 1.

Outdoor-Grills erfreuen sich einer zunehmenden Beliebtheit, insbesondere in Form von Gasgrills in Privathaushalten und im Rahmen von Betriebsveranstaltungen auch in Unternehmen. Wenn ein solcher Outdoor-Grill als Gasgrill ausgeführt ist, so können damit lange Anglühzeiten vermieden werden und rasch verschiedene Temperaturniveaus, insbesondere in verschiedenen Temperaturzonen, zur Verfügung gestellt werden, die ein besonders luxuriöses Grillerlebnis bieten.

Herkömmliche Outdoor-Gasgrills weisen unterhalb des Garraums, der von einer Garraumwand zumindest in horizontaler Umfangsrichtung umschlossen wird, häufig einen herausnehmbaren Blechtrichter auf, der über eine untere Auslassöffnung Fett ableitet, das von über den Brennern angeordnetem Grillgut heruntertropft. In einer Halterung unten am Blechtrichter ist eine herausnehmbare Fettauffangwanne angeordnet, in der sich das durch die Auslassöffnung abgeführte Fett sammelt. Der Trichter bildet somit einen Boden des Garraumes, ohne einteilig an der Garraumwand angeschlossen zu sein. Es ist auch möglich, den Boden des Garraumes einteilig mit der Garraumwand auszubilden.

Wenn im hinteren Bereich der Garraumwand der Gasanschluss für einen Brenner vorgesehen ist, insbesondere für einen Brenner, der im Bereich einer Rückseite des Garraums angeordnet ist, und eine gasführende Leitung von einem Ventil, das die Gaszufuhr regelt und im Bereich einer Vorderseite des Garraums angeordnet ist, zu dem Brenner vorgesehen ist, so muss diese Gasleitung herkömmlich entlang des äußeren seitlichen Umfangs des Garraums geführt werden, wodurch die Gasleitung eine erhebliche Länge aufweist und ein erhebliches gasführendes Volumen aufweist. Wenn somit das Ventil geöffnet wird, um den Brenner zu entzünden, so tritt eine Verzögerung ein, bis der Brenner, beispielsweise mit einem elektrischen Zünder, ausreichend mit Gas versorgt wird und entzündet werden kann, weil sich zuvor der gesamte gasführende Raum in dieser Gasleitung mit Gas über das Ventil befüllen muss. Eine solche Verzögerung führt in der Praxis dazu, dass ein Nutzer wiederholt erfolglos versucht, den Brenner zu entzünden, was zum einen die Lebensdauer des Zünders verkürzt und zum anderen als lästig empfunden wird.

US 6 176 173 B1 offenbart einen Outdoor-Gasgrill mit den im Oberbegriff von Anspruch 1 zusammengefassten Merkmalen. Zum weiteren Stand der Technik wird verwiesen auf US 2012/266856 A1, US 10 342 383 B2 und EP 3 375 335 A1.

Der vorliegenden Erfindung liegt die Aufgabe zugrunde, einen Outdoor-Gasgrill anzugeben, bei dem eine verzögerte Zündung eines Brenners sicher vermieden wird.

Die erfindungsgemäße Aufgabe wird durch einen Outdoor-Gasgrill mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Outdoor-Gasgrill weist einen Garraum auf, der beispielsweise auf einem Untergestell angeordnet ist. Das Untergestell bildet beispielsweise einen Schrank mit wenigstens einer Schwingtüre aus. Die wenigstens eine Schwingtüre überdeckt die Vorderseite des Untergestells wenigstens teilweise oder zumindest im Wesentlichen vollständig und ist um eine Vertikalachse seitlich nach außen verschwenkbar. Ferner kann das Untergestell einen oder zwei Seitentische aufweisen, der/die seitlich zum Garraum auf jeweils einer Außenseite des Untergestells montiert ist/sind.

Der Garraum wird erfindungsgemäß zumindest in horizontaler Umfangsrichtung von einer Garraumwand umschlossen und im Garraum ist wenigstens ein Brenner, insbesondere eine Vielzahl von Brennern, angeordnet. Die Brenner können zum Beispiel jeweils in Form eines gasführenden Rohres mit einer Vielzahl von Gasauslassöffnungen ausgeführt sein, wobei sich die Rohre insbesondere in einer ersten Richtung horizontal durch den Garraum erstrecken, beispielsweise parallel zueinander. Die erste Richtung kann insbesondere der Tiefenrichtung des Garraums entsprechen, also einer Richtung, ausgehend von einer Vorderseite des Garraums, wo zum Beispiel ein oder mehrere gasregelnde Ventile angeordnet sind, zu einer Rückseite des Garraums.

Der Garraum weist einen Boden auf, der den Garraum unterhalb des oder der Brenner teilweise verschließt. Der Boden kann gemäß einer Ausführungsform einteilig mit der Garraumwand ausgeführt sein, das heißt ein den Garraum in der horizontalen Umfangsrichtung umschließender Teil der Garraumwand ist einteilig mit dem Boden ausgeführt, sodass der Boden auch als Teil der Garraumwand bezeichnet werden kann. Gemäß einer alternativen Ausführungsform kann der den Garraum in der horizontalen Umfangsrichtung umschließende Teil der Garraumwand getrennt vom Boden vorgesehen sein, was nicht ausschließt beides als mehrteilige Garraumwand zu bezeichnen. Die Erfindung ist jedoch besonderes für eine einteilige Ausführung der Garraumwand mit dem Boden geeignet, oder bei einer zweiteiligen Ausführungsform für einen festen Anschluss des Bodes an der Garraumwand oder einem gemeinsamen Halter, sodass der Boden relativ zu Garraumwand fixiert ist.

Erfindungsgemäß ist im Boden, ungeachtet der ein- oder mehrteiligen Ausführungsform der Garraumwand, eine Vielzahl von horizontal nebeneinander angeordneten Fettabtropföffnungen vorgesehen, die von wenigstens einem Steg im Boden voneinander getrennt sind, wobei im Steg und/oder am Steg wenigstens eine Gasleitung und/oder ein elektrisches Kabel verläuft.

Die Gasleitung und/oder das elektrische Kabel ist/sind insbesondere von außen auf den Steg aufgesetzt, vorteilhaft auf dessen Unterseite. Alternativ kann/können die Gasleitung und/oder das elektrische Kabel auch wenigstens teilweise in den Steg eingebettet sein.

Da die wenigstens eine Gasleitung und/oder das wenigstens eine elektrische Kabel unterhalb des Stegs verläuft oder auch im Steg, ist sie/es vor herabtropfendem Fett geschützt. Erfindungsgemäß wird die wenigstens eine Gasleitung und/oder das wenigstens eine elektrische Kabel daher vollständig vom Steg überdeckt, betrachtet in einer Vertikalrichtung von oben nach unten. Die betrifft den Abschnitt der Gasleitung und/oder des elektrischen Kabels im Bereich des Stegs. Die Gasleitung und/oder das elektrische Kabel verläuft/verlaufen demnach nicht oberhalb des Stegs durch den Garraum.

Beispielsweise kann die wenigstens eine Gasleitung und/oder das wenigstens eine elektrische Kabel von unten am Steg befestigt sein. Jedoch kommt auch eine Befestigung an einem anderen Bauteil als dem Steg in Betracht.

Der Boden und/die Garraumwand ist/sind bevorzugt aus Guss hergestellt, insbesondere aus Aluminiumguss.

Gemäß einer Ausführungsform sind die gesamte Garraumwand und der Boden, insbesondere wenn diese einteilig ausgeführt sind, aus Guss, insbesondere Aluminiumguss, hergestellt. Damit kann ein thermisch günstiger, sehr stabiler und kompakter Aufbau erreicht werden.

Besonders bevorzugt ist wenigstens ein eine Gaszufuhr regelndes Ventil im Bereich einer Vorderseite des Garraums angeordnet und wenigstens ein Brenner ist im Bereich einer Rückseite des Garraums angeordnet, wobei eine gasführende Leitung vom Ventil zum Brenner entlang des Stegs, das heißt im Steg oder am Steg, verläuft. Selbstverständlich können auch mehrere solcher eine Gaszufuhr regelnde Ventile und mehrere gasführende Leitungen, je Ventil wenigstens eine Leitung, entlang des Stegs oder der Stege vorgesehen sein, beispielsweise um entsprechend die Gaszufuhr zu mehreren Brennern zu steuern. Je Steg kann eine gasführende Leitung vorgesehen sein oder es können auch mehrere gasführende Leitungen pro Steg vorgesehen sein. Ferner ist es nicht notwendig, dass jeder Steg eine gasführende Leitung aufweist.

Wenn der Brenner im Bereich der Rückseite des Garraums einen elektrischen Zünder aufweist, der mit Strom über das elektrische Kabel versorgt wird, so ist dieses Kabel vorteilhaft ebenfalls entlang eines Stegs verlegt.

Gemäß einer Ausführungsform der Erfindung sind wenigstens drei oder wenigstens vier, insbesondere genau drei oder genau vier Fettabtropföffnungen in einer Richtung, insbesondere Querrichtung des Garraums, nebeneinander angeordnet. Demgemäß sind zwei oder drei Stege bei drei oder vier Fettabtropföffnungen nebeneinander vorgesehen, die jeweils zwei Fettabtropföffnungen voneinander trennen.

Günstig ist, wenn unter den Fettabtropföffnungen eine herausnehmbare gemeinsame Fettauffangwanne oder bevorzugt eine Vielzahl von einzelnen herausnehmbaren Fettauffangwannen angeordnet ist. Die Herausnehmbarkeit erleichtert die Reinigung. Bei mehreren einzelnen Fettauffangwannen müssen nur die gereinigt werden, in welche Fett getropft ist.

Damit nur die Abdeckung für die wenigstens eine Gasleitung und/oder das wenigstens eine elektrische Kabel durch wenigstens einen Steg erreicht wird, ohne darüber hinaus den Querschnitt für abtropfendes Fett zu reduzieren, erstreckt sich bevorzugt jede Fettabtropföffnung über mehr als die Hälfte einer Erstreckung des Bodens in einer Tiefenrichtung des Garraums. Es sind also nicht viele einzelne kleine Fettabtropföffnungen vorgesehen, sondern vergleichsweise große, wobei beispielsweise wenigstens zwei Fettabtropföffnungen gemeinsam wenigstens 30 bis 40 Prozent der Breite der maximalen horizontalem Querschnittsfläche des Garraums abdecken.

Die Fettabtropföffnungen sind bevorzugt in ihrer Breite und/oder in ihrem Querschnitt jeweils größer als die Breite und/oder die Fläche des zwischen ihnen positionierten Stegs. Gemäß einer Ausführungsform erstrecken sich die Öffnungen gemeinsam über mehr als 30 Prozent, bevorzugt mehr als 40 Prozent oder mehr als 50 Prozent oder sogar mehr 60 Prozent der maximalen horizontalem Querschnittsfläche des Bodens und/oder des Garraums.

Gemäß einer bevorzugten Ausführungsform der Erfindung weist der Garraum einen Boden auf, der eine Wärmeisolationsschicht und/oder Wärmereflektionsschicht umfasst. Beispielsweise ist der Boden aus Guss, insbesondere Aluminiumguss, hergestellt, wobei die Wärmeisolationsschicht und/oder die Wärmereflektionsschicht wenigstens teilweise oder vollständig eingegossen ist. Insbesondere ist die Wärmeisolationsschicht und/oder Wärmereflektionsschicht formschlüssig und/oder stoffschlüssig in den Boden eingebettet, sodass sie nicht herausgenommen werden kann.

Die Erfindung soll nachfolgend anhand eines Ausführungsbeispiels und den Figuren exemplarisch erläutert werden.

Es zeigen:
- Figur 1: ein Ausführungsbeispiel für einen erfindungsgemäßen Outdoor-Gasgrill;
- Figur 2: den Garraum des Outdoor-Gasgrills ohne Brenner und Streben;
- Figur 3: eine Explosionsdarstellung eines Garraums mit Streben, Brennern und Abschirmblechen;
- Figur 4: eine schematische Darstellung einer Gasleitung und eines elektrischen Kabels unter einem Steg des Bodens;
- Figur 5: den unteren Bereich des Garraums mit Fettauffangwannen.

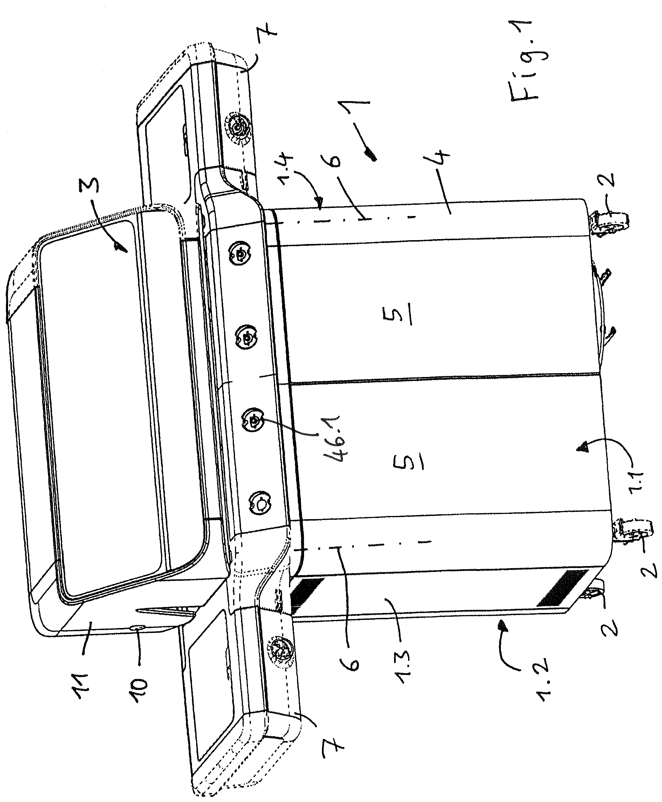

In der Figur 1 ist ein Outdoor-Gasgrill gezeigt, der ein Untergestell 1 mit einer Vorderseite 1.1, einer Rückseite 1.2 und zwei einander entgegengesetzten Außenseiten 1.3, 1.4 aufweist, die senkrecht zur Vorderseite 1.1 und zur Rückseite 1.2 angeordnet sind.

Das Untergestell 1 ist auf Rädern 2 verfahrbar, wobei im gezeigten Ausführungsbeispiel an allen vier unteren Ecken des Untergestells 1 jeweils ein Rad 2 vorgesehen ist. Gemäß einer alternativen Ausführungsform könnten auch nur zwei Räder 2 im Bereich nur einer Außenseite 1.3, 1.4 vorgesehen sein und im Bereich der anderen Außenseite 1.3, 1.4 wenigstens ein, zwei oder mehrere Füße, sodass der Outdoor-Gasgrill durch Anheben der Außenseite 1.3, 1.4 mit dem wenigstens einen Fuß schubkarrenartig mit den gegenüberliegenden Rädern 2 verfahrbar ist. Insbesondere können zwei Räder 2, beispielsweise auf einer der Außenseiten 1.3, 1.4 um eine Vertikalachse verschwenkbar sein und die anderen beiden Räder 2 können drehfest um eine Vertikalachse angeschlossen sein.

Auf dem Untergestell 1 ist ein Garraum 3 angeordnet, der hier durch eine Haube 11 abgedeckt ist, die über eine Horizontalachse 10 nach oben hinten verschwenkt werden kann, um einen Zugriff auf den Garraum zu ermöglichen. Die Haube 11 weist beispielsweise ein Sichtfenster auf, das den Blick von vorne in den Garraum 3 freigibt.

An den beiden Außenseiten 1.3, 1.4 des Untergestells 1 ist jeweils ein Seitentisch 7 vorgesehen, wobei ein solcher Seitentisch 7 nur eine Abstellfunktion haben kann oder Aufhängungen für Grillutensilien haben kann oder eine Gareinrichtung, wie einen Seitenkocher oder einen Seitengrill, umfassen kann.

Im gezeigten Ausführungsbeispiel sind auf der Vorderseite 1.1 des Untergestells 1 zwei Schwingtüren 5 vorgesehen, die einen Zugang zu dem durch das Untergestell 1 gebildeten Schrank 4 ermöglichen. Die Schwingtüren 5 sind jeweils um eine Vertikalachse 6 seitlich nach außen verschwenkbar, um den Zugang zu dem Innenraum des Schranks 4 freizugeben. Anstelle von zwei Schwingtüren 5 könnte auch eine einzige die Vorderseite 1.1 abdeckende Schwingtüre 5 vorgesehen sein.

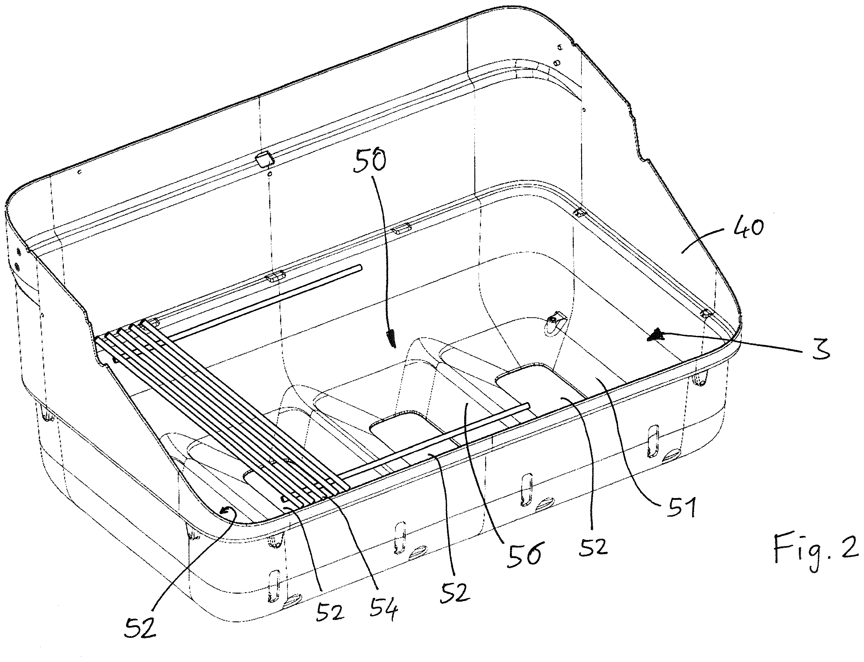

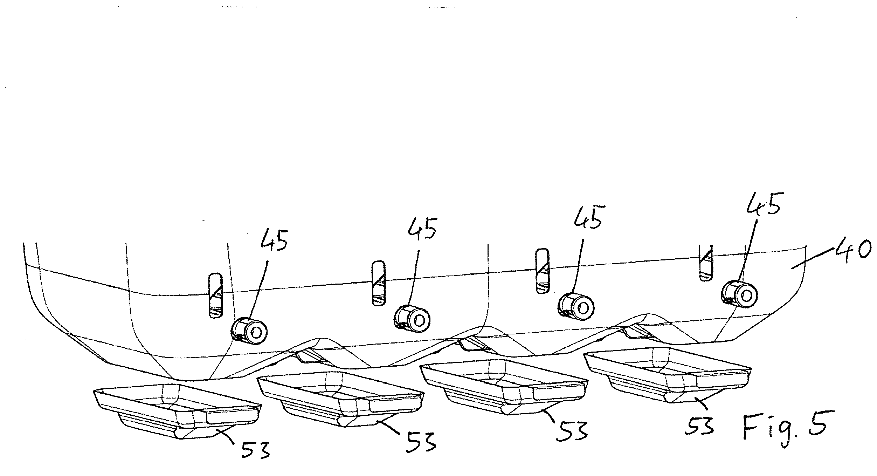

In der Figur 2 ist der Garraum 3 in einer Draufsicht schräg von oben dargestellt. Der Garraum 3 wird von einer Garraumwand 40 in horizontaler Umfangsrichtung, das heißt vertikal, vollständig umschlossen. Die Garraumwand 40 weist ferner einen Boden 50 auf, in dem mehrere, hier vier, Fettabtropföffnungen 52 vorgesehen sind. Unter den Fettabtropföffnungen 52 ist jeweils eine Fettauffangwanne 53 angeordnet, wie in der Figur 5 gezeigt ist.

Die Garraumwand 40 weist eine Auflage, hier in Form eines umlaufenden Rands oder auch in Form von einzelnen Auflageflächen, für einen Grillrost 54 auf, der nur schematisch angedeutet ist. Ferner ist eine Auflage für einen Warmhalterost oberhalb des Grillrosts 54 vorgesehen.

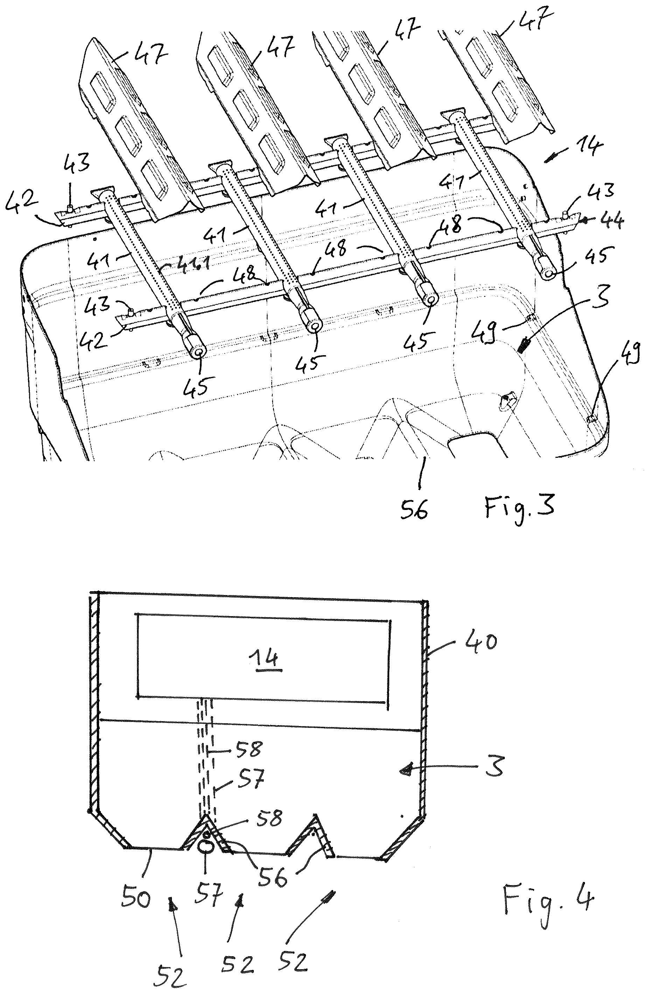

In der Figur 3 sind die Brenner 14, die auch als Hauptbrenner bezeichnet werden, dargestellt, mit welchen der Garraum 3 beziehungsweise auf dem Grillrost 54 befindliche Speisen gegart werden. Die Brenner 14 sind in Form von gasführenden, hier sich linear erstreckenden, Rohren 41 mit einer Vielzahl von Gasauslassöffnungen 41.1 ausgeführt. Die gasführenden Rohre 41 sind parallel zueinander auf Streben 42 gelagert, wobei die Streben 42 als Hohlstreben ausgeführt sind, die einen Gaskanal 44 umschließen, der über Gasauslassöffnungen 41.1 in gasleitender Verbindung mit den gasführenden Kanälen in den Rohren 41 steht. Die Streben 42 bilden damit Flammbrücken, die automatisch die Brenner 14 entflammen, bei denen die Flamme erloschen ist.

Die Rohre 41 sind hierfür in Aussparungen in den Streben 42 eingesetzt, sodass Gasauslassöffnungen 41.1 im jeweiligen Gaskanal 44 münden.

Die Kanäle in den Rohren 41 und Streben 42 können einen beliebigen Strömungsquerschnitt aufweisen, beispielsweise einen kreisrunden oder elliptischen Querschnitt, einen rechteckigen Querschnitt, einen quadratischen Querschnitt oder einen polygonförmigen Querschnitt.

Die Rohre 41 weisen Gaseinlässe 45 auf, die am stirnseitigen Ende eines jeden Rohres 41 vorgesehen sind und ein geradliniges Einströmen von Gas in Längsrichtung der Rohre 41 ermöglichen.

Die gasführenden Rohre 41 sind bevorzugt ausschließlich auf den Streben 42 gelagert und die Streben 42 sind auf Auflagen 49 in der Garraumwand 40 gelagert. Somit kann eine direkte Lagerung der Brenner 14 an der Garraumwand 40 vermieden werden, entsprechende Auflagen können eingespart werden.

Alle Bauteile im Garraum 3 - Streben 42, Rohre 41 und die Rohre 41 überdeckende Abschirmbleche 47 - sind ohne Werkzeug demontierbar und herausnehmbar im Garraum 3 gelagert. Die Streben 42 sind mit Rändelschrauben 43 an der Garraumwand 40 montiert und die gasführenden Rohre 41 sind mit Rändelschrauben 43 an den Streben 42 montiert. Die Rändelschrauben 43 können alle von Hand gelöst und angezogen werden. Es können aber auch andere Sicherungen, beispielsweise Stecksicherungen vorgesehen sein.

Die Abschirmbleche 47 sind von oben die Gasauslassöffnungen 41.1 in den Rohren 41 vollständig überdeckend in Einprägungen beziehungsweise Einbuchtungen 48 in den Streben 42 eingesetzt, wobei für jedes Abschirmblech 47 jeweils eine Einbuchtung 48 beidseitig des abzudeckenden Rohres 41 in der Strebe 42 vorgesehen ist.

In den Boden 50 der Garraumwand 40 kann eine Wärmeisolationsschicht und/oder Wärmereflektionsschicht 51 eingegossen sein, welche den Innenraum des Untergestells 1 vor einem übermäßigen Wärmeeintrag schützt.

In der Figur 4 ist ein schematischer Vertikalschnitt durch eine Garraumwand 40 gezeigt, wobei im Bereich der Rückseite des Garraums 3 ein Brenner 14 angeordnet ist, der beispielsweise als seitlicher Brenner beziehungsweise Rückseitenbrenner für einen hier nicht näher dargestellten Drehspieß positioniert sein kann und der sich insbesondere mit seiner flächigen Vorderseite innerhalb einer Vertikalebene erstreckt.

Der Brenner 14 wird über eine Gasleitung 57 mit Gas versorgt. Ferner kann der Brenner 14 einen elektrischen Zünder zum Entzünden des ihm zugeführten Gases aufweisen. Der Zünder wird mit elektrischem Strom über ein elektrisches Kabel 58 versorgt. Die Gasleitung 57 und/oder das elektrische Kabel 58 verläuft/verlaufen unterhalb eines Stegs 56 im Boden 50 der Garraumwand 40, sodass der Steg 56, der vorzugsweise dachförmig ausgebildet ist, die Gasleitung 57 und/oder das elektrische Kabel 58 von oben vollständig gegen herabtropfendes Fett abschirmt. Die Gasleitung 57 und/oder das elektrische Kabel 58 können dann außen auf der Rückseite der Garraumwand 40 nach oben zum Brenner 14 geführt sein, um den vertikalen Abstand zwischen dem Brenner 14 und dem Steg 56 zu überbrücken. Dies ist durch gestrichelte Linien dargestellt.

Im gezeigten Ausführungsbeispiel überdeckt nur einer der beiden Stege 56 eine Gasleitung 57 und/oder ein elektrisches Kabel 58. Dies könnte jedoch auch anders sein. Beispielsweise könnten unter jedem der beiden Stege 56 entsprechende Bauteile vorgesehen sein oder einer der beiden Stege 56 könnte insbesondere die Gasleitung 57 und der andere der beiden Stege 56 das elektrische Kabel 58 überdecken.

Durch die gezeigte Leitungsführung wird der gasführende Raum in der Gasleitung 57 zwischen einem Ventil 46.1 auf der Vorderseite des Garraums 3, wie es beispielsweise in der Figur 1 schematisch gezeigt ist, und dem Brenner 14 mit einer minimalen Größe ausgeführt. Dadurch kann eine besonders schnelle Versorgung des Brenners 14 mit Gas nach dem Öffnen des Ventils 46.1 erreicht werden, sodass der Brenner verzögerungsfrei gezündet werden kann.

### Bezugszeichenliste

- 1: Untergestell
- 1.1: Vorderseite
- 1.2: Rückseite
- 1.3: Außenseite
- 1.4: Außenseite
- 2: Rad
- 3: Garraum
- 4: Schrank
- 5: Schwingtüre
- 6: Vertikalachse
- 7: Seitentisch
- 10: Horizontalachse
- 11: Haube
- 14: Brenner
- 40: Garraumwand
- 41: Rohr
- 41.1: Gasauslassöffnung
- 42: Strebe
- 43: Rändelschraube
- 44: Gaskanal
- 45: Gaseinlass
- 46.1: Ventil
- 47: Abschirmblech
- 48: Einbuchtung
- 49: Auflage
- 50: Boden
- 51: Wärmereflektionsschicht
- 52: Fettabtropföffnung
- 53: Fettauffangwanne
- 54: Grillrost
- 56: Steg
- 57: Gasleitung
- 58: elektrisches Kabel

## Patentansprüche

1. Outdoor-Gasgrill mit einem Garraum (3), wobei
der Garraum (3) zumindest in horizontaler Umfangsrichtung von einer Garraumwand (40) umschlossen wird und
im Garraum (3) ein oder mehrere Brenner (14) angeordnet ist/sind, wobei der Garraum (3) einen Boden (50) aufweist, der den Garraum (3) unterhalb des oder der Brenner (14) teilweise verschließt; wobei
im Boden (50) eine Vielzahl von horizontal nebeneinander angeordneten Fettabtropföffnungen (52) vorgesehen ist, die von wenigstens einem Steg (56) im Boden (50) voneinander getrennt sind;
**dadurch gekennzeichnet, dass**
im Steg (56) und/oder am Steg (56) wenigstens eine Gasleitung (57) und/oder ein elektrisches Kabel (58) entlang des Stegs (56) verläuft, die wenigstens eine Gasleitung (57) und/oder das wenigstens eine elektrische Kabel (58) im Bereich des wenigstens einen Stegs (56) im und/oder unterhalb des wenigstens einen Stegs (56) verläuft/verlaufen und die wenigstens eine Gasleitung (57) und/oder das wenigstens eine elektrische Kabel (58) im Bereich des Stegs (56) vollständig von wenigstens einem Steg (56) überdeckt wird/werden.

2. Outdoor-Gasgrill gemäß Anspruch 1, **dadurch gekennzeichnet, dass** der Boden (50) und/oder die Garraumwand (40) aus Guss, insbesondere Aluminiumguss, hergestellt ist.

3. Outdoor-Gasgrill gemäß einem der Ansprüche 1 oder 2, **dadurch gekennzeichnet, dass** wenigstens ein eine Gaszufuhr regelndes Ventil (46.1) im Bereich einer Vorderseite des Garraums (3) angeordnet ist und wenigstens ein Brenner (14) im Bereich einer Rückseite des Garraums (3) angeordnet ist und eine gasführende Leitung vom Ventil (46.1) zum Brenner (14) entlang des Stegs (56), wenigstens teilweise im Steg (56) oder am Steg (56), verläuft.

4. Outdoor-Gasgrill gemäß Anspruch 3, **dadurch gekennzeichnet, dass** der Brenner (14) im Bereich der Rückseite des Garraums (3) einen elektrischen Zünder aufweist, der mit Strom über das elektrische Kabel (58) versorgt wird.

5. Outdoor-Gasgrill gemäß einem der Ansprüche 1 bis 4, **dadurch gekennzeichnet, dass** wenigstens drei oder wenigstens vier, oder genau drei oder genau vier Fettabtropföffnungen (52) in einer Richtung, insbesondere Querrichtung des Garraums (3), nebeneinander angeordnet sind.

6. Outdoor-Gasgrill gemäß einem der Ansprüche 1 bis 5, **dadurch gekennzeichnet, dass** sich jede Fettabtropföffnung (52) über mehr als die Hälfte einer Erstreckung des Bodens (50) in einer Tiefenrichtung des Garraums (3) erstreckt.

7. Outdoor-Gasgrill gemäß einem der Ansprüche 1 bis 6, **dadurch gekennzeichnet, dass** unter den Fettabtropföffnungen (52) eine herausnehmbare gemeinsame oder eine Vielzahl von einzelnen herausnehmbaren Fettauffangwannen (53) angeordnet ist.

8. Outdoor-Gasgrill gemäß einem der Ansprüche 1 bis 7, **dadurch gekennzeichnet, dass** die Garraumwand (40) einteilig mit dem Boden (50) ausgeführt ist.

## Claims

1. Outdoor gas grill having a cooking space (3), wherein
the cooking space (3) is enclosed by a cooking space wall (40) at least in the horizontal peripheral direction and
one or more burners (14) are arranged in the cooking space (3), wherein the cooking space (3) has a bottom (50) which partially closes the cooking space (3) below the burner or burners (14);
wherein a plurality of grease drip openings (52) are provided in the bottom (50) and arranged horizontally next to one another, and are separated from one another by at least one web (56) in the bottom (50);
**characterized in that**
at least one gas line (57) extends in the web (56) or on the web (56) and/or one electric cable (58) extends along the web (56), the at least one gas line (57) and/or the at least one electric cable (58) extends in and/or below the at least one web (56) in the region of the at least one web (56), and the at least one gas line (57) and/or the at least one electric cable (58) is/are completely covered by at least one web (56) in the region of the web (56).

2. Outdoor gas grill according to claim 1, **characterized in that** the bottom (50) and/or the cooking space wall (40) is/are made of cast material, in particular cast aluminum.

3. Outdoor gas grill according to one of claims 1 or 2, **characterized in that** at least one valve (46.1) controlling a gas supply is arranged in the region of a front side of the cooking space (3) and at least one burner (14) is arranged in the region of a rear side of the cooking space (3) and a gas-conducting line extends from the valve (46.1) to the burner along the web (56), at least partially in the web (56) or on the web (56).

4. Outdoor gas grill according to claim 3, **characterized in that** the burner (14) has an electric igniter in the region of the rear side of the cooking space (3), which igniter is supplied with current via the electric cable (58).

5. Outdoor gas grill according to one of claims 1 to 4, **characterized in that** at least three or at least four, or exactly three or exactly four grease drip openings (52) are arranged next to one another in one direction, in particular the transverse direction of the cooking space (3).

6. Outdoor gas grill according to one of claims 1 to 5, **characterized in that** each grease drip opening (52) extends over more than half of an extension of the bottom (50) in a depth direction of the cooking space (3).

7. Outdoor gas grill according to one of claims 1 to 6, **characterized in that** a removable common or a plurality of individual removable grease drip trays (53) is/are arranged under the grease drip openings (52).

8. Outdoor gas grill according to one of claims 1 to 7, **characterized in that** the cooking space wall (40) is designed in one piece with the bottom (50).

## Revendications

1. Gril à gaz extérieur
avec un espace de cuisson (3),
l'espace de cuisson (3) étant entouré au moins dans le sens périphérique horizontal par une paroi d'espace de cuisson (40) et
un ou plusieurs brûleurs (14) étant disposés dans l'espace de cuisson (3), l'espace de cuisson (3) présentant un fond (50) qui ferme partiellement l'espace de cuisson (3) au-dessous du ou des brûleurs (14) ;
dans le fond (50) étant prévue une pluralité d'orifices d'égouttage de graisse (52) disposés horizontalement les uns à côté des autres, qui sont séparés les uns des autres par au moins une nervure (56) dans le fond (50) ; **caractérisé en ce qu'**
au moins une conduite de gaz (57) et/ou un câble électrique (58) s'étend le long de la nervure (56) dans la nervure (56) et/ou sur la nervure (56), l'au moins une conduite de gaz (57) et/ou l'au moins un câble électrique (58) s'étend(ent) dans la zone de l'au moins une nervure (56) dans et/ou sous l'au moins une nervure (56) et l'au moins une conduite de gaz (57) et/ou l'au moins un câble électrique (58) est(sont) complètement recouvert(s) dans la zone de la nervure (56) par au moins une nervure (56).

2. Gril à gaz extérieur selon la revendication 1, **caractérisé en ce que** le fond (50) et/ou la paroi d'espace de cuisson (40) est réalisé(e) en fonte, en particulier en fonte d'aluminium.

3. Gril à gaz extérieur selon l'une des revendications 1 ou 2, **caractérisé en ce qu'**au moins une soupape (46.1) régulant une alimentation en gaz est disposée dans la zone d'un côté avant de l'espace de cuisson (3) et au moins un brûleur (14) est disposé dans la zone d'un côté arrière de l'espace de cuisson (3) et une conduite conduisant le gaz de la soupape (46.1) au brûleur (14) s'étend le long de la nervure (56), au moins en partie dans la nervure (56) ou sur la nervure (56).

4. Gril à gaz extérieur selon la revendication 3, **caractérisé en ce que** le brûleur (14) présente, dans la zone du côté arrière de l'espace de cuisson (3), un allumeur électrique alimenté en courant par le câble électrique (58).

5. Gril à gaz extérieur selon l'une des revendications 1 à 4, **caractérisé en ce qu'**au moins trois ou au moins quatre, ou exactement trois ou exactement quatre orifices d'égouttage de graisse (52) sont disposés côte à côte dans une direction, en particulier dans la direction transversale de l'espace de cuisson (3).

6. Gril à gaz extérieur selon l'une des revendications 1 à 5, **caractérisé en ce que** chaque orifice d'égouttage de graisse (52) s'étend sur plus de la moitié d'une étendue du fond (50) dans une direction de profondeur de l'espace de cuisson (3).

7. Gril à gaz extérieur selon l'une des revendications 1 à 6, **caractérisé en ce qu'**une cuve de collecte de graisse (53) commune amovible ou une pluralité de cuves de collecte de graisse individuelles amovibles est disposée sous les orifices d'égouttage de graisse (52).

8. Gril à gaz extérieur selon l'une des revendications 1 à 7, **caractérisé en ce que** la paroi d'espace de cuisson (40) est réalisée d'une seule pièce avec le fond (50).
